**Europäisches Patentamt**

**European Patent Office**

**Office européen des brevets**

(19)

(11) Veröffentlichungsnummer: **0 134 397**
**B1**

# (12) EUROPÄISCHE PATENTSCHRIFT

(45) Veröffentlichungstag der Patentschrift:
12.07.89

(51) Int. Cl.⁴: **A 01 F 15/00**

(21) Anmeldenummer: **84104515.6**

(22) Anmeldetag: **19.04.84**

(54) **Rundballenpresse.**

(30) Priorität: **30.06.83 DE 3323610**

(43) Veröffentlichungstag der Anmeldung:
**20.03.85 Patentblatt 85/12**

(45) Bekanntmachung des Hinweises auf die Patenterteilung:
**12.07.89 Patentblatt 89/28**

(84) Benannte Vertragsstaaten:
**AT CH FR GB IT LI**

(56) Entgegenhaltungen:
**DE-A-2 541 695**
**FR-A-2 383 598**
**US-A-3 914 926**

**LANDBOUWMECHANISATIE, Band 25, Nr. 12,
Dezember 1974, Seiten 1129-1134, Wageningen, NL;
H.M: ELEMA: "Persen voor grote pakken"**

(73) Patentinhaber: **GREENLAND GMBH & CO. KG,
Erwin- Dietrich- Platz 1, D-7702 Gottmadingen (DE)**

(72) Erfinder: **Schaible, Siegfried, Breslauer Strasse 15,
D-7700 Singen (DE)**

(74) Vertreter: **Patentanwälte Grünecker, Kinkeldey,
Stockmair & Partner, Maximilianstrasse 58,
D-8000 München 22 (DE)**

**Beschreibung**

Die vorliegende Erfindung betrifft eine Rundballenpresse mit einer Pick-up-Vorrichtung zur Aufnahme des Erntegutes gemäß dem Oberbegriff des Anspruchs 1.

Rundballenpressen bieten bei der Ernteeinbringung ein Höchstmaß an Wirtschaftlichkeit bei personalsparender Arbeitserleichterung. Insbesondere zum Pressen von Heu, Stroh und Welkheubergung zur Silagegewinnung eignen sich derartige Rundballenpressen, da sie eine hohe Preßdichte, die für den Gärprozeß ideal ist, ermöglichen.

Mit derartigen Rundballenpressen, wie sie z. B. in der DE-A-2 740 339 der Anmelderin beschrieben sind, wird das Erntegut vom Boden aufgenommen und durch eine Einlaßöffnung während der Sammelfahrt verdichtet, anschließend durch eine Bindeeinrichtung gebunden und in Form von runden Ballen durch eine Auslaßöffnung abgegeben, so daß sie insbesondere dort, wo der vorhandene Siloraum nicht ausreicht oder wo Futterüberschuß zu bergen ist oder wo kurzfristig kleinere Erntemengen konserviert werden müssen, auf einfache Art und Weise gelagert werden können.

Die Vielzahl entlang des Umfangs der Rollkammer angeordneten Walzen weisen bei den herkömmlichen Rundballenpressen die gleiche Drehrichtung auf. Dies bedingt jedoch noch den Nachteil, daß die unmittelbar oberhalb der Pick-up-Vorrichtung angeordnete, die Einlaßöffnung begrenzende Walze sich entgegen der Flußrichtung des in die Rollkammer eintretenden Erntegutes dreht, so daß dieser Fluß gebremst und damit behindert wird. So können im Bereich des Einzugsspalts Verstopfungen auftreten, die manuell zu beseitigen sind.

Aus der US-A-3 914 926 ist eine Rundballenpresse bekannt, die eine Vielzahl von parallel nebeneinander angeordnete, in gleicher Richtung umlaufenden und eine Rollkammer begrenzende elastische Riemen aufweist, die mit einem hinter der Pick-up-Vorrichtung angeordneten, die Unterseite des Einzugsspaltes begrenzenden Zufuhrriemen zusammenarbeiten. Oberhalb des Einzugsspaltes ist eine Vorpreßwalze angeordnet, deren Drehrichtung entgegengesetzt zur Drehrichtung der den Einzugsriemen antreibenden Walze ist. Um sich an den Futterstrom anpassen zu können, ist die Vorpreßwalze verschwenkbar an Armen gelagert, wobei die Schwenkachse die Seitenwände der Rundballenpresse an einer Stelle außerhalb der eigentlichen Rollkammer durchsetzt. Parallel zur Vorpreßwalze ist ein Querstab angeordnet mit einer Vielzahl von quer zu dessen Längsachse erstreckenden Fingern, die als Abdeckvorrichtung wirken. Diese unabhängig von der Lage der Vorpreßwalze an den Seitenwänden der Rundballenpresse befestigte Abdeckvorrichtung folgt jedoch den Bewegungen der Vorpreßwalze, so daß aufgrund der unterschiedlichen Abstände je nach der Dicke des einlaufenden Futterstromes immer noch Futter an den einzelnen Fingern hängenbleiben kann, wodurch Störungen beim Futtereinlauf auftreten können. Ferner ist diese Art der Einzugsspaltausgestaltung kompliziert im Aufbau und teuer in der Herstellung.

Aufgabe der vorliegenden Erfindung ist es eine Rundballenpresse zu schaffen, bei der die genannten Nachteile vermieden sind, bei der also ein ungehinderter Eintritt des Erntegutes in die Rollkammer gewährleistet ist und die einfach im Aufbau und damit billig in der Herstellung ist.

Ausgehend von einer Rundballenpresse der eingangs näher genannten Art wird zur Lösung dieser Aufgabe vorgeschlagen, daß die Vorpreßwalze vom Innenraum der Rollkammer durch ein mit ihr fest verbundenes Abdeckblech getrennt ist und daß die Schwenkachse des die Vorpreßwalze und das Abdeckblech tragenden Arms die Seitenwände der Rollkammer an einer Stelle durchsetzt, die einen geringeren Abstand von der Rollkammermittelachse aufweist als die Drehachsen der übrigen Walzen.

Da die schwenkbare Vorpreßwalze in ihrer Drehrichtung so ausgelegt ist, daß sie das eintretende Erntegut in Richtung zum Inneren der Rollkammer hin befördert, werden Verstopfungen und Bremsungen des Futterstromes mit Sicherheit vermieden. Ferner wird durch die schwenkbare Anordnung noch der Vorteil erzielt, daß das Erntegut gleichzeitig vorgepreßt wird, wobei sich die Vorpreßwalze der jeweiligen Schwadstärke anpaßt. Um den sich in der Rollkammer ausbildenden Rundballen nicht durch die entgegengesetzte Drehrichtung zu behindern, ist die Vorpreßwalze durch das Abdeckblech von dem an ihr entlang gleitenden Rundballen getrennt.

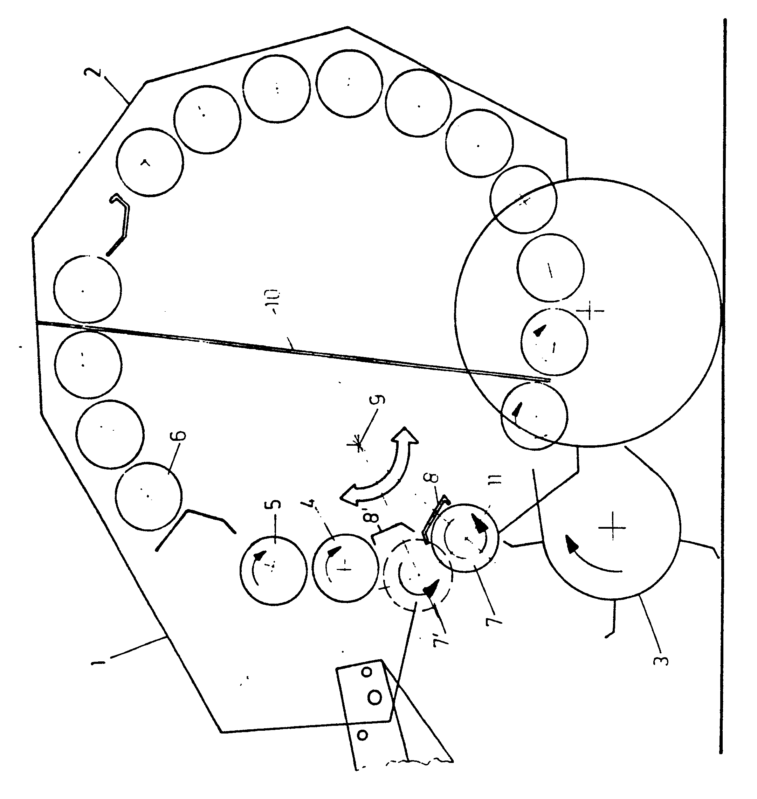

Im folgenden wird die Erfindung anhand der Zeichnung näher erläutert, in der ein vorteilhaftes Ausführungsbeispiel dargestellt wird.

In der einzigen Figur ist eine von einem Schlepper gezogene Rundballenpresse schematisch dargestellt, mit einer quer zur Fahrtrichtung liegenden zylindrischen Rollkammer, deren in Fahrtrichtung gesehen vordere Hälfte mit 1 und deren in Fahrtrichtung gesehen hintere Hälfte mit 2 bezeichnet ist. Entlang des Umfangs der Rollkammer sind eine Vielzahl aneinandergereihter Walzen angeordnet, von denen drei mit den Bezugszeichen 4, 5 und 6 versehen sind und deren Achsen parallel zur Mittelachse 10 der Rollkammer für die Umwälzung des Erntegutes verlaufen. Die Walzen 2 sind zum Teil frei drehbar gelagert, zum anderen Teil angetrieben. Nach fertiger Ausbildung des Rundballens kann die hintere Gehäusehälfte 2 zusammen mit den zugehörigen Walzen zur Abgabe des Ballens nach oben verschwenkt werden.

Der vordere feststehende Teil 1 des Gehäuses weist im unteren Bereich einen Einlaßspalt 11 auf; hier weisen die Walzen einen größeren Abstand voneinander auf. Von dem Einlaßspalt 11 in Fahrtrichtung nach vorne gesehen, erstreckt sich eine Pick-up-Vorrichtung 3. Das auf dem Boden liegende langhalmige Erntegut wird von der Pick-up-Vorrichtung 3 während der Sammelfahrt aufgenommen und in die Rollkammer transportiert, wo es durch die Walzen 4, 5, 6 ... zu einem Rundballen gewickelt und gepreßt wird. Nach Fertigstellung des Ballens wird der Antrieb abgeschaltet und der Ballen durch eine nicht dargestellte Bindeeinrichtung gebunden. Ist der Ballen fertig gebunden, so wird der rückwärtige Teil 2 des Gehäuses der Rundballenpresse hochgeklappt, der Ballen ausgestoßen und das Gehäuse danach wieder geschlossen.

Wie die einzige Figur schematisch erkennen läßt, ist oberhalb des Einzugspaltes 11 und damit oberhalb der Pick-up-Vorrichtung 3 die erste Walze als in Richtung zur Pick-up-Vorrichtung 3 eine verschenkbare Vorpreßwalze 7 ausgebildet, deren Drehrichtung entgegengesetzt zur Drehrichtung der übrigen Walzen ist, wie es durch die eingezeichneten Pfeile angedeutet ist. Der von der Pick-up-Vorrichtung 3 in das Innere der Rollkammer beförderte Futterstrom wird demzufolge von der Vorpreßwalze 7 mitgefördert und gleichzeitig mit einem gewissen Druck beaufschlagt, wobei sich die Vorpreßwalze 7 der jeweiligen Schwadstärke anpaßt.

Damit der sich in der Rollkammer ausbildende Rundballen nicht durch die entgegengesetzte Drehrichtung der Vorpreßwalze 7 behindert wird, ist diese gegen den Innenraum der Rollkammer hin durch ein mit ihr fest verbundenes, ebenfalls schwenkbares Abdeckblech 8 abgedeckt. Vorpreßwalze 7 und Abdeckblech 8 werden von einem nicht eingezeichneten Haltearm getragen, der mit den Seitenwänden der Rollkammer verbunden ist. Die Verbindungspunkte des Haltearmes mit der Rollkammerseitenwand und damit die Schwenkachse für die Vorpreßwalze 7 durchsetzen die Seitenwände der Rollkammr an einer Stelle 9, die einen geringeren Abstand von der Rollkammer mit der Achse 10 aufweist, als die Drehachsen der übrigen Walzen 4, 5, 6 ... . Dadurch ergibt sich ein ausreichender Schwenkbereich der Vorpreßwalze 7, so daß diese sowohl mit der Pick-up-Vorrichtung als auch mit der ersten, unterhalb des Erntegutes angeordneten Preßwalze zusammenwirken kann.

Die Vorpreßwalze 7 ist in der Figur in zwei Stellungen dargestellt, wobei die obere gestrichelte Stellung dem Zufluß eines stärkeren Futterstromes entspricht.

Aufgrund des nunmehr problemlosen Einführens des Futterstromes in das Innere der Rollkammer und der nicht mehr auftretenden Verstopfungen am Einzugsspalt erhöht sich die Einsatzzeit der Maschine, d. h. daß die von ihr erbrachte Leistung gesteigert wird.

**Patentanspruch**

Rundballenpresse mit einer Pick-up-Vorrichtung zur Aufnahme des Erntegutes, einer Bindeeinrichtung für die Ballen und einer Rollkammer, an deren Seitenwänden eine Vielzahl von Walzen drehbar gelagert ist, wobei oberhalb des Einzugspaltes (11) und damit oberhalb der Pick-up-Vorrichtung (3) eine in Richtung zur Pick-up-Vorrichtung hin verschwenkbare Vorpreßwalze (7) angeordnet ist, deren Drehrichtung entgegengesetzt zur Drehrichtung der übrigen Walzen (4, 5, 6...) ist, dadurch gekennzeichnet, daß die Vorpreßwalze (7) vom Innenraum der Rollkammer (1, 2) durch ein mit ihr fest verbundenes Abdeckblech (8) getrennt ist, und daß die Schwenkachse des die Vorpreßwalze (7) und das Abdeckblech (8) tragenden Arms die Seitenwände der Rollkammer (1, 2) an einer Stelle (9) durchsetzen, die einen geringeren Abstand von der Rollkammermittelachse (10) aufweist als die Drehachsen der übrigen Walzen (4, 5, 6, ...).

**Claims**

Roll baler including a pick-up device for picking-up the harvested material, a binding means for binding the bales and a roller chamber, a plurality of rollers being rotatably mounted on the lateral walls of said roller chamber, wherein an initial pressing roller (7), which is pivotable in the direction towards the pick-up device, is disposed above the feed gap (11), and hence above the pick-up device (3), the direction of rotation of said initial pressing roller being opposite the direction of rotation of the other rollers (4, 5, 6...), characterised in that the initial pressing roller (7) is separated from the interior of the roller chamber (1, 2) by means of a cover plate (8), which is fixedly connected relative thereto, and in that the pivotal axis of the arm carrying the initial pressing roller (7) and the cover plate (8) extends through the lateral walls of the roller chamber (1, 2) at a location (9) which is spaced a shorter distance from the central axis (10) of the roller chamber than the axes of rotation of the other rollers (4, 5, 6...).

**Revendication**

Presse à balles rondes avec un dispositif de préhension pour le ramassage de la récolte, un dispositif de liage pour les balles et une chambre à rouleaux, sur les parois latérales de laquelle sont logés de façon rotative une pluralité de cylindres, un cylindre de précompression (7) pouvant pivoter dans la direction du dispositif de préhension étant disposé au-dessus de la fente d'introduction (11) et ainsi au-dessus du dispositif de préhension (3), dont le sens de rotation est opposé au sens de rotation des autres cylindres (4, 5, 6...), caractérisée en ce que le cylindre de précompression (7) est séparé de l'espace intérieur de la chambre à rouleaux (1, 2) par une tôle de recouvrement (8) reliée à celui-ci de façon fixe, et en ce que l'axe de pivotement du bras portant le cylindre de précompression (7) et la tôle de recouvrement (8) traverse les parois latérales de la chambre à rouleaux (1, 2) en une position (9) qui présente une distance de l'axe central (10) de la chambre à rouleaux plus faible que les axes de rotation des autres cylindres (4, 5, 6...).